# EUROPÄISCHE PATENTSCHRIFT

(11) **EP 1 730 368 B1**
(45) Veröffentlichungstag und Bekanntmachung des Hinweises auf die Patenterteilung: **17.08.2011**
(21) Anmeldenummer: 05706194.7
(22) Anmeldetag: 21.02.2005
(51) Int. Cl.: E04F 15/04, E04F 15/02, F16B 5/00

(54) **VERBINDUNGSPLATTE**
JOINING PANEL
PLAQUE DE JONCTION

(30) Priorität: 23.03.2004 AT 5112004
(43) Veröffentlichungstag der Anmeldung: 13.12.2006
(73) Patentinhaber: KAINDL FLOORING GmbH, 5071 Wals (AT)
(72) Erfinder: KNAUSEDER, Franz, A-5020 Salzburg (AT)
(74) Vertreter: Wildhack & Jellinek
(86) Internationale Anmeldenummer: PCT/AT2005/000054
(87) Internationale Veröffentlichungsnummer: WO 2005/090707

(56) Entgegenhaltungen:
- WO-A-03/087497
- WO-A-03/093686
- WO-A1-03/016654
- US-A1- 2002 046 526
- US-A1- 2004 031 227

## Beschreibung

Die Erfindung betrifft eine Verkleidungsplatte für Fußböden, Wände oder Decken oder ähnliche Einsatzzwecke gemäß dem Oberbegriff des Patentanspruches 1.

Derartige Platten besitzen an ihren Seitenflächen Nuten und Federn, um diese Platten im Verband verlegen zu können. Um einen möglichst stabilen Verband zu erreichen, kann auch vorgesehen sein, dass die Platten miteinander verklebt werden.

Aus einem bekannten Stand der Technik sind miteinander zusammenwirkende bzw. aneinander angepasste Verriegelungselemente bekannt geworden, wobei zur Abdichtung der Verriegelungsbereiche Dichtungsmaterial angebracht ist oder zur Ausbildung einer Verbindung der Verriegelungselemente Klebstoff eingebracht ist. Dieses Dichtungsmaterial bzw. dieser Klebstoff wirken jedoch nicht per se als Verriegelungselement bzw. tragen zu einer mechanischen kraft- oder formschlüssigen Verriegelung von zwei miteinander zu verbindenden Plattenelementen nichts bei.

Aus der US-A 20040031227 ist eine Verbindungsplatte bekannt, welche die Merkmale des Oberbegriffes des Patentanspruches 1 aufweist. Vorgesehene Rastausnehmungen stellen Vertiefungen in der Nutfläche dar.

Vorrangiges Ziel der Erfindung ist es, Platten der eingangs genannten Art möglichst einfach und kostengünstig herstellen zu können, des weiteren deren Lagerung über längere Zeiträume ohne Beeinträchtigung und raumsparend zu ermöglichen und schließlich das Verlegen und allenfalls eine Demontage möglichst plattenschonend, rasch und einfach zu gestalten. Ein weiteres Ziel ist es, eine stabile, haltbare und feste Fläche aus den miteinander verbundenen Platten zu erstellen; beim Verlegen soll allerdings ein Ausrichten der Platten über eine gewisse Zeitspanne möglich sein. Die Nut und die Feder sollen stabil und einfach herstellbar und gut verrastbar sein; die Raupe bzw. Bahn aus Klebstoff und/oder Kunststoff soll einfach und haltbar aufgebracht werden können.

Diese Ziele werden bei einer Verkleidungsplatte der eingangs genannten Art mit den im Kennzeichen des Anspruches 1 angeführten Merkmalen erreicht.

Erfindungsgemäß ist in der Nut bzw. auf zumindest der Innenfläche eines der Schenkel der Nut eine, insbesondere speziell ausgebildete, Rastvertiefung und in einer speziell ausgebildeten Vertiefung in zumindest einer Fläche der Feder eine Raupe bzw. Bahn aufgebracht, die miteinander verrastbar sind. Auf diese Weise wirken die Raupe und die Rastvertiefung im Zuge des Verlegens der Verkleidungsplatten bzw. im Zuge deren Aneinanderfügens als Verriegelungseinrichtungen; die Raupe und die Rastvertiefung wirken als Rast- bzw. Verriegelungselemente zusammen. Die Raupe aus Kunststoff und/oder Kleber wird in einfacher und rascher Vorgangsweise werksseitig aufgebracht, z.B. aufgespritzt.

Mit der erfindungsgemäßen Ausbildung der Verkleidungsplatten wird ein exaktes Anliegen von der Feder an den Innenwandflächen der Nut erreicht und die Rastvertiefung in der Nutinnenwandfläche kann exakt mit der Raupe, die in der Ausnehmung der

Federfläche platziert ist, zusammenwirken, womit die gegenseitige Lage der miteinander zu verbindenden Platten exakt festgelegt ist. Bei entsprechender Ausbildung der Raupe ist auch ein Verkleben zwischen der Feder und der Nut möglich; soferne ein Verkleben im Zuge des Zusammenfügens der Platten nicht erfolgt, so können diese Platten wieder voneinander getrennt und auch wieder zusammengesetzt werden. Die vorgesehene Rastverbindung lässt somit ein mehrmaliges Verrasten und darauffolgendes Trennen der Platten zu.

Diese Art der Verbindungs- und gegebenenfalls Verklebetechnik ist für Verkleidungsplatten aus beliebigen Materialien, Holz, Holzwerkstoffe, insbesondere MDF, HDF, Span usw. einsetzbar.

Es kommt eine Reihe von Kunststoffen in Frage, die als entsprechende Raupe bzw. Bahn eingesetzt bzw. aufgebracht werden können. Insbesondere kommen dafür Silikonkunststoffe, Kunststoffe auf der Basis von Polyalkylen, insbesondere PVC, PE, PP sowie Schmelzkleber auf der Basis von Neopren in Frage. Derartige Kunststoffe sollen heiß verformbar bzw. heiß klebend und in Raupenform extrudierbar bzw. formbar sein und an dem jeweiligen Werkstoff der Platte anhaftend erstarren können. Im Gebrauch sollen sie entsprechende Elastizität und Viskosität besitzen, um als Rastelement wirken zu können. Die Raupen sind zähelastisch bzw. zähviskos bzw. relativ hart.

Als warm verformbare Kunststoffe kommen insbesondere Thermoplaste, Elastomere bzw. thermoplastische Elastomere in Frage. Als Thermoplaste können Polyolefine, Vinylpolymere, Polyamide, Polyester, Polyurethan und Ionomere eingesetzt werden. Als Elastomere können diverse Kautschukarten eingesetzt werden. Als thermoplastische Elastomere kommen vor allem TPE, TPR, TPO, SPS, TP-Q, TP-U in Frage. Als Kunststoffe können auch Schmelzklebstoffe bzw. Heißsiegelklebstoffe eingesetzt werden, auf der Basis von Ethylenvinylchlorid, PA, PU, EVA. Auch andere Kunststoffe sind einsetzbar.

Die Klebstoffe sollen eine ausreichende Festigkeit aufweisen, um beim Einschieben der Feder in die Nut nicht abgetragen oder in ihrer Oberflächengestalt beschädigt zu werden und sollen aufgrund von eindringender Luftfeuchtigkeit und/oder durch Auftragen von Wasser im Zuge des Verlegens oder des Gebrauches ausreichend aktiviert werden können, um ihre Klebewirkung voll zu entfalten. Nach dem Erhärten des Klebstoffes der Klebstoffraupe(n) wirken diese einerseits aufgrund der Klebewirkung und anderseits aufgrund der entfalteten Verriegelungswirkung; die Raupen wirken mit dem Material der Feder oder der Nut zusammen. Die eingesetzten Klebstoffe und Kunststoffe sollen mit einer Düse auf das jeweilige Material der Platte aufbringbar sein und dort gut haften.

Vorteilhafterweise können Kleber und/oder Kunststoffe eingesetzt werden, die wasserdicht bzw. wasserresident sind bzw. wasserfest aushärten, wodurch das Material der Platten, insbesondere MDF oder HDF, vor Feuchtigkeit geschützt werden kann. Ausgeschüttetes Wasser kann die Paneelplatten nicht durchdringen sondern von oben nur bis zur Raupe vordringen und auch die ausgebildeten Raupen nicht angreifen oder zerstören; vom Boden aufsteigende Feuchtigkeit wird am Austreten gehindert.

Vorteilhafterweise können der Kleber und/oder der Kunststoff zähelastisch ausgebildet sein. Bei dem Zusammenfügen der Paneele besitzen der Kleber und/oder der Kunststoff ausreichende Zähigkeit, um Verformungen elastisch nachgeben und ansonsten Beschädigungen verursachenden Beanspruchungen auszuweichen zu können. Die Möglichkeit einer zähelastischen Deformation verbessert das Abdichtungsverhalten bzw. ermöglicht eine entsprechende Elastizität, sodass auf Temperatur- und/oder Belastungsund/oder Feuchtigkeitsänderungen beruhende gegenseitige Bewegungen der Platten, insbesondere Dehnungen oder Schrumpfungen verbundener Paneele, elastisch abgefedert bzw. gebildete Spalte wieder rückgebildet werden können. Damit werden die Beanspruchung verlegter bzw. verbundener Paneele allgemein und im Stoßbereich entstehende Abnutzungen durch Begehen reduziert. Ein elastisch verformbarer Kleber oder Kunststoff passt sich an das jeweilige Gegenprofil an und verbessert die Passung. Schließlich müssen bei einem elastisch deformierbaren Kleber und/oder Kunststoff die Schenkel der Nut nicht so weit aufgedehnt werden, wenn beim Einführen eine gewisse sich rückbildende Deformation des elastischen Klebers und/oder Kunststoffes erfolgten kann. Des Weiteren ermöglicht eine zähelastische Raupe ein wiederholtes Aneinanderfügen und Trennen der Paneele ohne Beeinträchtigung ihrer Form oder ihres Funktionsverlustes.

Der auf der Fläche der Nut und/oder der Feder anhaftende Kleber und/oder Kunststoff schützt bzw. verstärkt die tragende Fläche. So ist es möglich, dass an die eingesetzten Fräswerkzeuge weniger hohe Ansprüche bezüglich deren Genauigkeit gestellt werden müssen. Die aufgebrachte Raupe bzw. Bahn deckt Schwachstellen der Fräsung, z.B. Ausrisse, Fransen usw., ab bzw. gleicht diese aus. Damit kann die Standzeit der eingesetzten Holzfräswerkzeuge erhöht werden.

Derartige Verkleidungsplatten haben den Vorteil, dass die Handgriffe und Manipulationsschritte beim Verlegen der Paneele vor Ort wesentlich reduziert sind; es ist lediglich erforderlich, mit einem entsprechenden Behelf Wasser in die Nut einzubringen und/oder auf die Feder aufzubringen, um den Kleber zu aktivieren, wenn dies überhaupt gewünscht wird. Sofern es sich um einen aufgrund der vorhandenen Feuchtigkeit in der Luft aushärtenden Kleber handelt, so ist auch diese Vorgangsweise nicht erforderlich.

Ein besonderer Vorteil liegt darin, dass durch die Masse des in der Kleberaupe werkseitig vorgegebenen Klebers ein richtig bemessenes bzw. ausreichendes Maß an Klebstoff vorhanden ist und ein Hantieren mit bzw. ein Abtragen von allenfalls überschüssig aufgetragenem Kleber bzw. ein Austreten des Klebers aus der Nut-Federverbindung entfällt.

Zur Erzielung der Rast- und/oder Klebeverbindung reichen relativ geringe Klebemengen aus. Unterstützt wird die Wirkung der Raupen durch einen möglichst großflächigen Kontakt zwischen Nut und Feder.

Es ist durchaus möglich, dass beim Einschieben der mit der Raupe versehenen Feder in die Nut eine Aufweitung der Schenkel der Nut erfolgt, aufgrund eines Übermaßes bzw. einer Überdimensionierung der Raupe. Im Zuge des Verlegens oder im Zuge des Gebrauchs kann durch eindringende Luftfeuchtigkeit oder durch beim Verlegen aufgebrachtes Wasser bzw. entsprechenden Lösungsmitteln erreicht werden, dass die Raupe erweicht und verformt wird und sich an die Nutinnenwandfläche vorgegebene Form anpasst, wodurch die elastisch aufgeweiteten Nutschenkel wieder in ihre anfänglich vorgegebene Form bzw. Lage sich zurückverstellen können. Eine derart verformte Raupe stellt eine gute Klebeverbindung zwischen Nut und Feder her.

Als Kleber kommen insbesondere auch Leime in Frage, die aus wasserlöslichen, tierischen (Glutin, Kasein), pflanzlichen (Stärke, Dextrin, Celluloseether) oder synthetischen (z.B. Polyacrylsäure-Derivate, Polyvinylalkohol, Polyvinyl-Pyrrolidon) Polymeren und Wasser als Lösungsmittel bestehen. Diese gehören, zur Klasse der einkomponentigen kalt abbindenden Klebstoffe, bei denen das Lösungsmittel (Wasser) während des Prozesses des Verklebens aufgesaugt wird bzw. entweicht. Diese Leime erstarren beim Erkalten, insbesondere gallertartig, und trocknen meist zu einer transparenten Masse ein, welche sich bei Kontakt mit Wasser zu einem Gel mit hoher Klebkraft auflöst.

Bevorzugt ist es, wenn ein mit Wasser aufbereiteter bzw. ein in Wasser dispergiertes Klebemittel bzw. ein Leim als Kleberaupe aufgebracht und in situ bzw. werkseitig getrocknet wird. Durch Aufbringen von Wasser beim Verbraucher direkt auf diese eingetrocknete Klebeschicht oder durch einen indirekten, intensiven Kontakt mit dem auf ein anzufügendes Paneel bzw. dessen Nut oder Feder aufgebrachten Wasser oder durch eindringende Feuchtigkeit wird nach dem Aneinanderfügen der Paneele der getrocknete Kleber aktiviert und in den aktiven klebebereiten Zustand rückgeführt. Das Aufbringen des wässerigen Aktivators kann durch Aufsprühen oder durch Aufbringen mittels Schwamm od.dgl., erfolgen.

Bei einer vorteilhaften Vorgangsweise werden zuerst die Kleberaupen mit Wasser angefeuchtet bzw. auf die Federn und/oder in die Nuten der Platten ein die Kleberaupe zumindest benetzender Film aus Wasser als Kleberaktivator aufgebracht bzw. aufgesprüht und sodann die Platten aneinander gefügt. Die offene Zeit des reaktivierten Klebers wird derart gewählt, dass ausreichend Zeit für das Aneinanderfügen der Platten vorhanden ist.

Wenn die Raupe bzw. Bahn aus Kunststoff ausgebildet ist, so besitzt diese Ausführungsform den Vorteil, dass die Nut und die Feder einfach miteinander verriegelbar sind; ist die Raupe bzw. Bahn aus einem Klebstoff gebildet, so kann eine Verriegelung begleitet von einer Verklebung erfolgen.

Von Vorteil ist es, wenn die Merkmale des Anspruches 2 verwirklicht sind. Bei einer derartigen Ausbildung von Feder und Nut wird der Zusammenhalt von zwei zusammenzufügenden Verkleidungsplatten verbessert und ein im wesentlichen beträchtliche Steifigkeit aufweisender Belag erreicht. In diesem Fall kann der Kleber der Klebstoffraupen die besonders innige Verbindung zwischen der Nut und der Feder unterstützen.

Von Vorteil ist es, wenn die Merkmale des Anspruches 3 erfüllt sind. Auf diese Weise wird die Gefahr einer Beschädigung bzw. eines Abscherens der Klebstoffraupen oder Kunststoffraupen beim Einschieben der Feder in die Nut herabgesetzt bzw. deren Halt an der Fläche, an der die Raupe anhaftet, erhöht. Auch in diesem Zusammenhang ist es von Vorteil, wenn die Klebstoffraupe in ihrer Ausnehmung und/oder an den Wandflächen der Nut und/oder den Federflächen fest anhaftet. Dieses feste Anhaften soll auch bei Aktivierung des Klebers durch Kontakt mit Wasser nicht gänzlich verloren gehen, insbesondere soll dieses Anhaften möglichst stark ausgebildet sein.

Vorteilhafterweise ist vorgesehen, dass die Nut und die Feder jeweils längs bzw. in einer Längsseite und/oder längs bzw. in einer Querseite einer Platte ausgebildet sind, wobei gegebenenfalls die Feder und/oder die Nut und/oder die Raupen bzw. Bahnen sich über die gesamte Länge der jeweiligen Seitenfläche erstrecken. Damit wird über alle Seiten der Verkleidungsplatten beim Verlegen mit den zu verbindenden Verkleidungsplatten eine optimale Verbindbarkeit und ein optimaler Zusammenhalt erreicht.

Bei ebenen Wand- bzw. Oberflächen wird das Fügen der ebenen Flächen mit geringem Kraftaufwand möglich; es ist lediglich erforderlich, die durch die aufgebrachten Raupen ausgebildeten Erhöhungen zu überwinden, um diese in die Ausnehmungen einzufügen. Von Vorteil ist es, wenn zumindest ein Schenkel, vorzugsweise der untere, der Nut beim Einführen der Feder elastisch aufweitbar bzw. elastisch aufbiegbar ist und/oder der eingesetzte Kunststoff und/oder Kleber entsprechende(s) elastisches Verhalten bzw. Viskosität besitzt. Damit wird die Raupe beim Verbinden der Platten geschont.

Eine vorgenommene elastische Aufweitung der Schenkel der Nut durch eine eine gewisse Übergröße aufweisende Klebstoffraupe kann im Zuge der Aktivierung des weichwerdenden Klebers wieder teilweise, weitgehend oder vollständig rückgängig gemacht werden; somit können sich die Querschnitte der Kleberaupen ein gewisses Übermaß aufweisen. Diesbezüglich sind die Merkmale des Anspruches 6 von Vorteil.

Erfindungsgemäß kann vorgesehen sein, dass der Klebstoff der Klebstoffraupen bzw. -bahnen wasserlöslich ist oder bei Kontakt mit oder Zufuhr von Wasser und/oder Feuchtigkeit anlösbar und/oder aktivierbar ist und/oder von wasserlöslichem Leim, z.B. Weißleim, und/oder von einem Druckkleber bzw. einem bei Aufbringen von Druck Haftwirkung entfaltenden bzw. druckaktivierbaren Kleber gebildet ist.

Erfindungsgemäß kann ferner vorgesehen sein, dass die Platte aus Holzwerkstoff, MDF, HDF, Kunststoff, rezykliertem Kunststoff, mit Kunstharz bzw. gebundenen Spänen (Spanplatten) gebildet ist und gegebenenfalls auf ihrer Vorder- bzw. Gebrauchsfläche und/oder auf ihrer Rückseite jeweils mit zumindest einer Auflage, z.B. einer Dekorauflage, insbesondere aus Kunststoff, Dekorpapier, Holz od.dgl., versehen ist.

Ein guter Zusammenhalt von zwei zu verbindenden Platten bzw. von Nut und Feder ergibt sich, wenn der überragende Abschnitt 10 der Raupe bzw. Bahn 8 als Rast- bzw. Verriegelungselement und/oder als Klebewirkung entfaltendes Element wirkt. Bei einer derartigen Ausführungsform steht die Klebstoffraupe in gutem in Kontakt mit der Rastvertiefung.

Von besonderem Vorteil ist es, wenn erfindungsgemäß die Merkmale des Kennzeichens des Anspruches 4 erfüllt sind. Auf diese Weise erfüllen verformungsresistente Raupen eine Doppelfunktion, nämlich, sie wirken als Verriegelungselement und als Element zum Verbinden von zwei Platten.

Die in den Ansprüchen 9 bis 12 angeführten Merkmale betreffen bevorzugte Gestaltungen der Raupe bzw. der Rastvertiefung und der Ausnehmung und bieten vor allem guten Kontakt dieser Elemente bzw. Haltbarkeit beim Verbinden und beim Gebrauch der Platten.

Im folgenden wird die Erfindung anhand der Zeichnungen, die beispielsweise und schematische Ausführungsformen der Erfindung darstellen, näher erläutert.

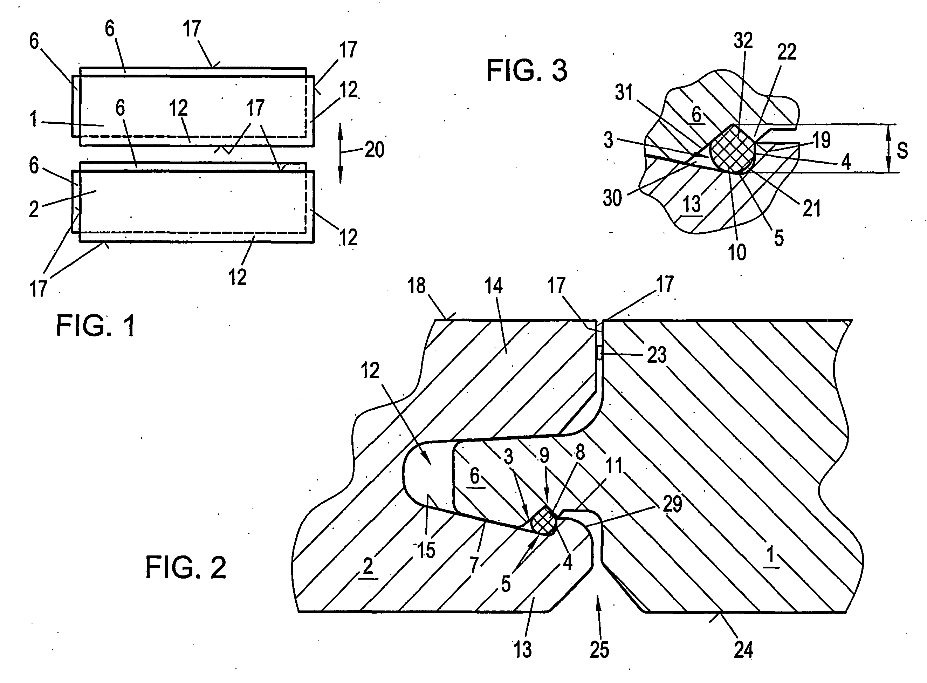

Fig. 1 zeigt schematisch das Aneinanderfügen von zwei Verkleidungsplatten; Fig. 2 zeigt einen schematischen Schnitt durch Verkleidungsplatten; Fig. 3 zeigt eine Detailansicht von Fig. 2.

Fig. 1 zeigt schematisch zwei Verkleidungsplatten 1, 2, die in Richtung des Pfeiles 20 aufeinander zu verschoben und miteinander verbunden werden sollen. Dieses durch Verschieben erfolgende Verbinden kann bzw. soll als letzter Verbindungsschritt nur in der von den beiden Platten 1, 2 aufgespannten Ebene erfolgen. Die beiden Platten weisen jeweils an einer ihrer Längsseiten und/oder Schmalseite eine von der Stirnfläche 17 vorspringende Feder 6 und an der gegenüberliegenden Längsseite und/oder Schmalseite eine in der Stirnfläche, 17 ausgebildete Nut 12 auf. Gleiche Verhältnisse können an den Stirnflächen 17 der Schmalseiten vorliegen; jede der Platten 1, 2 kann an der Stirnfläche 17 dieser Schmalseiten jeweils eine Nut 12 und eine Feder 6 aufweisen.

Die Form der Nut und der Feder ist aneinander angepasst, um eine gute Verbindung zwischen der Nut und der Feder zu gewährleisten. Diese Form lässt ein Einschieben der Feder 6 in die Nut 12 zu, wenn die Platten 1, 2 in der Plattenebene ausgerichtet sind. Es ist möglich, die Platten 1, 2 schachbrettartig oder gegeneinander versetzt zu verbinden. Sowohl das Verbinden an den Längsseiten als auch an den Schmalseiten erfolgt durch Verschieben im wesentlichen in der von den Platten 1, 2 aufgespannten Ebene. Die erfindungsgemäße Verbindungsart könnte auch nur an den Quer- bzw. Schmalseiten von Platten vorgesehen sein, die an der Längsseite auf andere Art, z.B. durch Ver- bzw. Einschwenken der anzuschließenden Platte verbunden werden.

Fig. 2 zeigt schematisch einen Schnitt durch zwei Platten 1, 2, die zusammengefügt wurden. Die Platte 1 weist eine Feder 6 auf, die in eine Nut 12 der Platte 2 eingeführt wird, bis die Stirnflächen 17 oder an den Stirnflächen 17 ausgebildete Vorsprünge bzw. Anschläge 23 im oberen Bereich bzw. im Bereich, der der Oberfläche 18 der Platten 1, 2 nahegelegen ist, aneinander anliegen. Die Begrenzungskanten der Nut 12 und/oder der Feder 6 können gerundet bzw. gefast sein.

Auf zumindest einer Federfläche, im vorliegenden Fall der oberflächenfernen Federfläche 7 ist in einer Ausnehmung 3 eine Raupe 8 aufgetragen bzw. haftet insbesondere fest an der Wand der Ausnehmung 3 an. An einer bei verbundenen Platten entsprechenden bzw. zugeordneten Stelle der im vorliegenden Fall oberflächenfernen Wandfläche 15 der Nut 12 bzw. der Innenfläche des unteren Schenkels 13 ist eine an die Lage der Raupe 8 angepasste Rastvertiefung 5 in der ansonsten vorzugsweise ebenen Wandfläche 15 ausgebildet, insbesondere durch Ausbildung einer Rastfläche 4. Beim Verbinden der beiden Platten 1, 2 bzw. beim Einschieben der Feder 6 in die Nut 12 kommt die Raupe 8 im Bereich hinter einer Rastfläche 4 der Rastvertiefung 5 zu liegen bzw. kann mit dieser verrasten.

Vorteilhafterweise ist vorgesehen, dass der Klebstoff der Klebstoffraupe bzw. - bahn 8 wasserlöslich ist oder bei Kontakt mit oder Zufuhr von Wasser und/oder Feuchtigkeit anlösbar und/oder aktivierbar ist und/oder von wasserlöslichem Leim, z.B. Weißleim, und/oder von einem Druckkleber bzw. einem bei Aufbringen von Druck Haftwirkung entfaltenden bzw. druckaktivierbaren Kleber gebildet ist. Die Aktivierung des Klebers der Klebstoffraupe 8 kann erfolgen, indem vor dem Zusammenfügen der Platten 1, 2 die Klebstoffraupen 8 mit Wasser benetzt wird oder in die Nut 12 und/oder auf die Feder 6 Wasser aufgegeben wird. Je nach Wahl des Klebers kann auch vorgesehen sein, dass nach dem Verrasten der Klebstoffraupe 8 mit der Rastfläche 4 durch im Gebrauch der Platten 1, 2 eindringende Luftfeuchtigkeit die Klebefähigkeit der Klebstoffraupe 8 aktiviert und damit eine Klebeverbindung zwischen der Feder 6 und dem Schenkel 3 der Nut 12 hergestellt wird. Prinzipiell könnten auch Kleber eingesetzt werden, die mit anderen Substanzen als Wasser aktivierbar sind.

Für das Zusammenfügen der Platten 1, 2, im vorliegenden Fall für das Einführen der mit der Raupe 8 versehenen Feder 6 in die Nut 12, ist vorgesehen, dass zumindest ein Schenkel 13, 14 der Nut 12 beim Einführen der Feder 6 elastisch aufweitbar bzw. elastisch aufbiegbar ist.

Prinzipiell ist es möglich, auf einer oder auf beiden Federflächen 7 bzw. auf einer oder beiden Wandflächen 15 der Nut 12 die Raupe 8 bzw. die Rastvertiefung 5 auszubilden.

Vorteilhaft ist es, wenn beide Federflächen 7 zum freien Ende der Feder 6 hin konvergieren und die Wandflächen 15 der Nut 12 im gleichen Winkel wie die Federflächen 7 geneigt sind und nach innen zu konvergieren.

Für diese und auch für alle anderen Ausführungsformen kann gelten, dass in vorteilhafter Weise die Feder 6 und die Nut 12 zumindest über einen Teil des Einschubbereiches der Feder 6 formschlüssig bzw. mit Passsitz verbindbar sind, wobei der vor der Raupe bzw. Bahn 8 zum freien Ende der Feder 6 hin gelegene Bereich der Feder 6 formschlüssig bzw. mit Passsitz in die Nut 12 einsetzbar ist. Es kann vorgesehen sein, dass die Feder 6 und/oder die Nut 12 und/oder die Raupe 8 und die Rastvertiefung 5 sich über die gesamte Länge der jeweiligen Seitenfläche 17 erstrecken bzw. dass die Raupe 8 und die Rastvertiefung 5 und die Ausnehmung 3 sich durchgehend über die Länge der Nut 12 und/oder der Feder 6 erstrecken oder in Form von einzelnen aufeinanderfolgenden Abschnitten ausgebildet bzw. aufgebracht bzw. ausgebildet sind.

Als Werkstoff für die erfindungsgemäßen Platten ist vorteilhafterweise vorgesehen, dass die Platte 1, 2 aus Holz, Holzwerkstoff, MDF, HDF, Kunststoff, rezykliertem Kunststoff, mit Kunstharz bzw. gebundenen Spänen (Spanplatten) gebildet ist und gegebenenfalls auf ihrer Vorder- bzw. Gebrauchsfläche 18 und/oder auf ihrer Rückseite 24 jeweils mit zumindest einer Auflage, z.B. einer Dekorauflage, insbesondere aus Kunststoff oder Dekorpapier versehen ist. Ferner kann vorteilhafter Weise vorgesehen sein, dass die Nut 12 und die Feder 6 aus dem Material der Platte 1, 2 ausgebildet oder aus diesem ausgefräst sind, bzw. dass die Feder 6 einstückig mit dem Material der Platte 1, 2 gebildet ist.

Es kann vorgesehen sein, dass ein Teil der Raupe bzw. Bahn 8 in der Ausnehmung 3 versenkt angeordnet ist, die in der Federfläche 7 ausgebildet ist. Die Form der Ausnehmung 3 hilft mit, dass die aufgebrachte Raupe 8 fest mit der Federfläche 7 verbunden ist und sich beim Einführen der Feder 6 in die Nut 12 nicht abschert bzw. löst. Wie in Fig. 3 dargestellt, kann die Ausnehmung 3 auch einen Bereich 30 aufweisen, der frei von Raupenmaterial ist und allenfalls mit Raupenmaterial gefüllt wird, wenn sich bei einem Übermaß bzw. aufgrund ihrer Dicke die die Schenkel 13, 14 der Nut 12 spreizende Raupe 8 beim Klebevorgang erweicht und das Raupenmaterial in diesem Bereich 30 gedrückt wird.

Es soll zumeist vermieden werden, dass die Schenkel 13, 14 der Nut 12, die beim Einführen der Feder 6 in die Nut 12 elastisch aufgeweitet werden, in der aufgeweiteten Stellung verbleiben. In aufgeweitetem Zustand könnte der Stoß zwischen den Oberflächen 18 der beiden Platten 1,2 eine Stufe ausbilden, welche erhöhter Abnützung unterworfen wäre, soferne nicht nur der untere Schenkel elastisch aufgeweitet verbleibt. Bei einer besonders vorteilhaften Ausführungsform der Erfindung ist vorgesehen, dass der oberflächennahe Schenkel 14 der Nut 12 stärker bzw. weniger elastisch, insbesondere überhaupt unelastisch, ausgebildet ist und nur der bodennahe bzw. untere Schenkel 13 der Nut elastisch auslenkbar gestaltet ist. Damit kann vermieden werden, dass durch größere bzw. weniger gut verformbare Raupen 8 ein Aufbiegen des oberen oberflächennahen Schenkels 14 erfolgt, sondern lediglich der untere schwächere bzw. dünnere Schenkel 13 der Nut 12 abgebogen wird. Vorteilhafterweise kann zur Vermeidung des Aufbiegens des oberen Schenkels 14 auch vorgesehen sein, dass die Raupe 8 lediglich auf der nach unten gerichteten Federfläche 7 bzw. die Rastvertiefung 5 in der Wandfläche 15 des unteren Schenkels 13 der Nut 12 ausgebildet sind. Auf diese Weise würden sowohl die Feder 6 als auch der obere Schenkel 14 der Nut 12 einem Aufwölben der Verbindungsstelle entgegenwirken, wenn das Ausmaß bzw. das Volumen der Raupe zu groß bemessen ist bzw. bei Einsatz eines Klebers dieser nicht ausreichend weich gemacht wird und/oder das für ihn vorgegebene Freivolumen 30 und/oder der Bereich 21 zwischen Nut und Feder nicht ausreichend bemessen sind.

Von Vorteil kann es sein, wenn die vorderen Kantenbereiche der Nut 12 Rundungen bzw. Abschrägungen 29 aufweisen, so wie dies in Fig. 2 dargestellt ist, um beim Einfügen der Feder 6 in die Nut 12 die Raupe 8 schonend einführen zu können.

Im oberflächenfernen bzw. bodennahen Bereich der Platten 1, 2 ist vorgesehen, dass die Stirnflächen 17 einander nicht berühren bzw. dass dazwischen ein Spalt 25 ausgebildet wird. Dies wird insbesondere dadurch erreicht, dass der bodennahe Schenkel 13 der Nut 12 geringfügig kürzer ausgebildet ist als der oberflächennahe Schenkel 14.

Es kann vorgesehen sein, dass die Klebstoffraupe bzw. -bahn 8 ein klebe-latentes Klebematerial, vorzugsweise einen mit Wasser emulgierbaren Polymerkleber umfasst, wobei das Klebematerial durch Anfeuchten mit Wasser in den klebebereiten bzw. klebefähigen Zustand überführbar ist. Der Kunststoff oder das mittels Wasser bzw. Wasserfeuchte (re)aktivierbare Klebermaterial der Klebstoffraupe bzw. -bahn 8 kann mit einer im wesentlichen gleichmäßigen Gesamt-Schichtdicke S von 0,5 bis 0,9 mm, insbesondere von 0,6 bis 0,8 mm, bei Dickentoleranzen im Bereich von ±0,05 bis 0,1 mm, aufgebracht werden. Der Kleber der Klebstoffraupe bzw. -bahn 8 kann von einem Schnellbinder- bzw. Montageleim auf Polyvinylacetat-Basis, wie beispielsweise Dorus MDO 55 der Firma Henkel, oder von einem handelsüblichen Holzleim, z.B. auf Stärkeund/oder Proteinbasis, gebildet sein.

Bei entsprechender Abrundung der Kanten des freien Endes der Feder 6 und/oder Abrundung der Innenkanten der Wandflächen 5 der Schenkel 13, 14 der Nut 12, ist es möglich, beim Verlegen die aneinanderzufügenden Platten 1, 2 vorerst auch in einem gewissen Winkel aneinander zu legen, um einen Eintritt der Feder 6 in die Nut 12 in einem gewissen Ausmaß zu erreichen. Die endgültige Verrastung von Feder 6 und Nut 12 bzw. der letzte Verriegelungsschritt, der mit der Berührung der Stirnflächen 17 im oberflächennahen Bereich endet, ist allerdings nur möglich, wenn die Platten 1, 2 relativ zueinander in der Plattenebene verschoben werden.

Es sollte Sorge getragen werden, dass der Kleber entsprechend aufgeweicht bzw. weich wird, sodass im Stoßbereich der miteinander zu verbindenden Platten 1, 2 keine Unebenheiten ausgebildet werden. Die Menge des aufzubringenden Klebers in der Klebstoffraupen 8 hängt vor allem von den geometrischen Gegebenheiten zwischen der Feder 6 und der Nut 12 bzw. von der Größe der Ausnehmungen 3, bzw. des freien Bereiches 30 der Rastvertiefung 5 und/oder der Größe des Bereiches 21 ab und insbesondere auch von der Viskosität des reaktivierten Klebers.

Aus Fig. 3 ist die spezielle Form einer vorteilhaften Ausnehmung 3 ersichtlich. Die Ausnehmung 3 besitzt dreieckförmigen Querschnitt und verläuft in der Federfläche 7 und ausgehend von dieser in das Innere der Feder 6 zu einer, im vorliegenden Fall von einer Endkante gebildeten, Basis 9 und von dieser in eine Richtung weg von der Feder 6 zu einer Begrenzungswand 22, die wiederum dreieckförmigen Querschnitt aufweist und in den nutflächennahen Flächenbereichen 11 der Feder 6 übergeht.

Die Spitze bzw. Kante des Wandbereiches 22 liegt im Wesentlichen oberhalb der End- bzw. Eckkante, zu der die Rastfläche 4 ausläuft. Die im Wesentlichen dreieckförmigen Querschnitt aufweisende Vertiefung 3 nimmt einen Teilbereich bzw. die Basis 32 der Raupe 8 auf; mit einem Bereich 10 steht die Raupe aus der Vertiefung 3 hervor, um in Anlage an die Rastfläche 4 und gegebenenfalls die Nutinnenwandfläche 15 zu treten. Zwischen der Raupe 8 und dem gerundetem Übergang zwischen der Rastfläche 4 und der Innenwandfläche 15 des unteren Schenkels 13 der Nut 12 liegt ein freier mondförmiger Bereich 21.

Die Rastfläche 4 liegt am aus der Ausnehmung 3 heraustretenden Teil 10 der Raupe 8 an und verriegelt damit die Feder 6 in der Nut 12.

Beidseits des heraustretenden Abschnittes 10 der Raupe 8 liegt jeweils ein Freiraum, und zwar der mondförmige Raum 21 und der freie Raum 30. Diese Räume sind vorgesehen zur Aufnahme von Staub und/oder von Raupenmaterial für den Fall, dass die Raupe eine Höhe S aufweist, welche ein Aufspreizen der Schenkel 13 und 14 bei Einführen der Feder in die Nut hervorrufen würde. In diese Räume könnte bei Anlösen bzw. Erweichung des Materials der Raupe 8 überschüssiges Material eintreten, bei einer allfälligen gleichzeitigen Verklebung des Materials der Raupe 8 mit der Rasfläche 4 und/oder der Fläche des Bereiches 21 und/oder der Fläche 15 der Nut.

Die Anschläge 23 sind an zumindest einer der beiden Stirnflächen 17 ausgebildet und legen das Eindringen der Feder 6 in die Nut 12 weitgehend fest, sodass die Feder 6 nicht zu weit in die Nut 12 eintritt bzw. die Schenkel 13 und 14 nicht spreizt aber trotzdem von der Nut 12 ohne Spiel aufgenommen wird.

Die Nuten 12, Federn 6 samt Ausnehmung 3 und Rastvertiefung 5 werden vorzugsweise durch Fräsen hergestellt.

Die Form der Nuten 12 und Federn 6 ist vorteilhafterweise aneinander angepasst, dies ist aber nicht zwingend erforderlich. Auch nicht formmäßig aneinander angepasste Nuten und Federn können mit den erfindungsgemäß ausgebildeten bzw. angebrachten Raupen 8 zusammengehalten werden.

Die Raupen 8 können auch in Form von aufeinanderfolgenden Teilstücken aufgebracht, d.h. gegebenenfalls mit Unterbrechungen aufgebracht werden.

## Patentansprüche

1. Verkleidungsplatte(n) für Fußböden, Wände oder Decken, die vorzugsweise aus Holz, Holzwerkstoff, MDF, HDF, Kunststoff, rezykliertem Kunststoff, mit Kunstharz und/oder gebundenen Spänen oder Spanplatten gebildet ist, welche Verkleidungsplatten längs zumindest einer Kante oder Stirnfläche (17) eine Nut (12) und/oder längs zumindest einer anderen Kante oder Stirnfläche (17) eine Feder (6) aufweist,
- wobei miteinander zu verbindende Platten (1, 2) durch ein Einführen der Feder (6) in die Nut (12) im Zuge eines im wesentlichen in der Plattenebene erfolgenden Verschiebens verbindbar sind,
- wobei auf zumindest einer Federfläche (7) eine, insbesondere werkseitig aufgebrachte, Raupe (8) aus Klebstoff und/oder Kunststoff aufgebracht und angebunden ist,
- wobei in der Federfläche (7) eine dreieckförmigen Querschnitt aufweisende Ausnehmung (3) ausgebildet ist, von der die Raupe (8) aus Klebstoff und/oder Kunststoff teilweise aufgenommen ist,
- wobei in der der Federfläche (7) mit der Ausnehmung (3) zugewandten Nutinnenwandfläche (15) eine von einer Rastfläche (4) begrenzte Rastvertiefung (5) ausgebildet ist, in welche Rastvertiefung (5) bei in die Nut (12) eingeführter Feder (6) die Raupe (8) hineinragt und von welcher Rastvertiefung (5) der aus der Ausnehmung (3) vorragende Teil (10) der Raupe (8) umgriffen oder aufgenommen ist, sodass die Raupe (8) und die Rastfläche (4) nach Einführen der Feder (6) in die Nut (12) verrastbar und/oder miteinander verbindbar und in zusammengefügten Zustand von zwei benachbarten Platten (1, 2) miteinander verrastet und/oder verbunden sind, und
- wobei die Rastfläche (4) zur Oberfläche der Platte (1, 2) senkrecht steht,
**dadurch gekennzeichnet,**
- **dass** die Ausnehmung (3) in einem Bereich der Feder (6) ausgebildet ist, der von der Federfläche (7) in Richtung auf die Stirnfläche der Platte (1, 2) zurückspringt bzw. einen zurückspringenden Bereich der Federfläche (7) ausbildet, und ausgehend von der Federfläche (7) in das Innere der Feder (6) zu einer von einer Endkante gebildeten Basis (9) und von dieser in eine Richtung weg von der Feder (6) zu einer dreieckförmigen Querschnitt aufweisenden Begrenzungswand (22) verläuft und über diese in den nutflächennahen Flächenbereich (11) der Feder (6) übergeht,
- **dass** die Rastfläche (4) von einer Verlängerung der dem Nutgrund nahen Nutinnenwandfläche (15) ausgebildet bzw. dargestellt wird und direkt an diese anschließt, und
- **dass** in verrasteter Stellung von Nut (12) und Feder (6) zwischen der Raupe (8) und einem gerundeten Übergang (21) zwischen der Nutinnenwandfläche (15) und der Rastfläche ein insbesondere mondförmiger Spalt (21) ausgebildet ist.

2. Platte(n) nach Anspruch 1, **dadurch gekennzeichnet, dass** die Nut (12) und die Feder (6) jeweils an einer Längsseite und an einer Querseite einer Platte (1, 2) in oder an deren Stirnfläche (17) ausgebildet sind und/oder
- dass die Dicke der Feder (6) zum freien Ende hin abnimmt, wobei zumindest eine Federfläche (7) zur Oberfläche der Platten (1, 2) geneigt verläuft und
- dass die Wandfläche(n) (15) der Nut (12) im gleichen Winkel wie die zugehörige(n) bzw. anliegende(n) Federfläche(n) (7) verlaufen und/oder
- dass die Feder (6) und die Nut (12) zumindest über einen Teil der einander zugekehrten Flächen (7, 15) formschlüssig bzw. mit Passsitz verbindbar sind und/oder
- dass zumindest der vor der Raupe bzw. Bahn (8) zum freien Ende der Feder (6) hin gelegene Bereich der Feder (6) formschlüssig bzw. mit Passsitz in die Nut (12) einsetzbar ist und/oder
- dass die Feder (6) und/oder die Nut (12) und/oder die Raupe bzw. Bahn (8) und/oder Rastvertiefung (5) sich über die gesamte Länge der jeweiligen Seitenfläche (17) erstrecken oder dass die Nut (12) und/oder die Feder (6) und/oder die Raupe (8) und/oder die Rastvertiefung (5) in Form von aufeinanderfolgenden beabstandeten Abschnitten bzw. Raupenabschnitten bzw. Vertiefungen sich längs der Seitenfläche (17) erstrecken.

3. Platte(n) nach Anspruche 1 oder 2, **dadurch gekennzeichnet, dass** ein Teil der Raupe bzw. Bahn (8) in der Ausnehmung (3) versenkt angeordnet ist.

4. Platte(n) nach einem der Ansprüche 1 bis 3, **dadurch gekennzeichnet, dass** der Klebstoff der Raupe bzw. Bahn (8) wasserlöslich ist oder bei Kontakt mit oder Zufuhr von Wasser und/oder Feuchtigkeit anlösbar und/oder aktivierbar ist und/oder von wasserlöslichem Leim, z.B. Weißleim, und/oder von einem Druckkleber bzw. einem bei Aufbringen von Druck Haftwirkung entfaltenden bzw. druckaktivierbaren Kleber gebildet ist und/oder von einem Schnellbinder- bzw. Montageleim auf Polyvinylacetat-Basis und/oder von einem handelsüblichen Holzleim, z.B. auf Stärke- und/oder Proteinbasis, gebildet ist und/oder
- dass die Raupe bzw. Bahn (8) eine Härte bzw. Zähigkeit bzw. Viskosität aufweist, dass sie ein Einschieben der Feder (6) in die Nut (12) bzw. das Aufweiten der Nut (12) beim Einschieben der Feder (6) bzw. das Darübergleiten des Nutschenkels ohne wesentliche bleibende Formänderung übersteht und nach dem Einschieben der Feder (6) als Verriegelungselement gegen ein Austreten der Feder (6) aus der Nut (12) wirkt, gegebenenfalls solange bis eine Klebewirkung eintritt.

5. Platte(n) nach einem der Ansprüche 1 bis 4, **dadurch gekennzeichnet,**
- **dass** die Schenkel (13, 14) der Nut (12) gleich lang sind und/oder
- **dass** der an der Rückseite der Platte (1, 2) ausgebildete Schenkel (14) der Nut (12) geringfügig kürzer ist als der an der Vorderseite der Platte (1,2) liegende Schenkel (13) und/oder
- **dass** zumindest ein Schenkel (13, 14) der Nut (12), vorzugsweise der untere Schenkel (14), beim Einführen der Feder (6) elastisch aufweitbar bzw. elastisch aufbiegbar ist und/oder
- **dass** die Nut (12) und die Feder (6) aus dem Material der Platte (1, 2) ausgebildet oder aus diesem ausgefräst sind, oder
- **dass** die Feder (6) einstückig mit dem Material der Platte (1, 2) gebildet ist und/oder
- **dass** im Bereich der Ober- bzw. Gebrauchsflächen (18) von zwei miteinander verbundenen Platten (1, 2) die Stirnftächenbereiche aneinander anliegen und gegebenenfalls im Bereich der Rückseite (24) der miteinander verbundenen Platten (1, 2) zwischen den Stirnflächen (17) ein Spalt (25) ausgebildet ist.

6. Platte(n) nach einem der Ansprüche 1 bis 5, **dadurch gekennzeichnet, dass** der aus der Ausnehmung (3) herausragende Abschnitt (10) der Raupe bzw. Bahn (8) und/oder die Rastvertiefung (5) im Querschnitt eine gerundete Kontur, insbesondere linsenförmige, halbelliptische oder kreisförmige Kontur, aufweisen und/oder
- dass der überragende Abschnitt (10) der Raupe bzw. Bahn (8) als Rast- bzw. Verriegelungselement und/oder als Klebewirkung entfaltendes Element wirkt und/oder
- dass der Klebstoff einer aufgebrachten Raupe bzw. Bahn (8) verformbar, insbesondere bei Einwirkung von Wasser und/oder Feuchtigkeit und/oder stetem Druck verformbar ist und sich gegebenenfalls an die Querschnittsform der Rastvertiefung (5), insbesondere bei gleichzeitiger Entfaltung seiner Klebewirkung, anpasst bzw. freien Raum dieser Rastvertiefung (5) anfüllt - soferne Klebermasse im Übermaß vorhanden ist und/oder
- dass die Raupe bzw. Bahn (8) in der Ausnehmung (3) fest anhaftet und/oder
- dass in verriegelter bzw. verrasteter Stellung von Nut (12) und Feder (6) die Raupe (8) an der Rastfläche (4) und gegebenenfalls der Nutfläche (15), insbesondere in einer dieser Flächen (4, 15) druckbeaufschlagenden Stellung anliegt.

7. Platte(n) nach einem der Ansprüche 1 bis 6, **dadurch gekennzeichnet, dass** die Klebstoffraupe bzw. -bahn (8) ein klebe-latentes Klebematerial, vorzugsweise einen mit Wasser emulgierbaren Polymerkleber umfasst, wobei das Klebematerial durch Anfeuchten mit Wasser in den klebebereiten bzw. klebefähigen Zustand überführbar ist und/oder
- dass der Kunststoff bzw. das mittels Wasser bzw. Wasserfeuchte (re)aktivierbare Klebermaterial der Klebstoffraupe bzw. -bahn (8) mit einer im wesentlichen gleichmäßigen Schichtdicke von 0,5 bis 0,9 mm, insbesondere von 0,6 bis 0,8 mm, bei Dickentoleranzen im Bereich von ±0,05 bis 0,1 mm, aufgebracht ist.

8. Platte(n) nach einem der Ansprüche 1 bis 7, **dadurch gekennzeichnet, dass** der oberflächennahe Schenkel (3) der Nut (12) stärker bzw. dicker und/oder weniger elastisch abbiegbar ausgebildet ist als der untere Schenkel (4) und/oder dass Raupe (8) nur an der nach unten gerichteten Federfläche (7) und die Rastvertiefung (5) nur in der Wandfläche des des unteren Schenkels (4) der Nut (12) ausgebildet sind.

9. Platte(n) nach einem der Ansprüche 1 bis 8, **dadurch gekennzeichnet, dass** die Raupe (8) und die Rastfläche (4) der Rastvertiefung (5) einander hintergreifen und/oder
- dass die Raupe (8) in verriegelter Stellung von Nut (12) und Feder (6) unter Druck- bzw. Kraftbeaufschlagung durch zumindest einen beim Einführen der Feder (6) in die Nut (12) aufgeweiteten Nutschenkel (13, 14) stehen und/oder
- dass sich die Raupe (8) zumindest abschnittsweise parallel zu bzw. längs der Kanten der Stirnfläche (17) bzw. in Längsrichtung der Platte (1, 2) erstreckt.

10. Platte(n) nach einem der Ansprüche 1 bis 9, **dadurch gekennzeichnet, dass** der Querschnitt der Raupe (8) in dem aus der Ausnehmung (3) herausragenden Bereich kreisförmig oder elliptisch bzw. linsenförmig gerundet ist.

11. Platte(n) nach einem der Ansprüche 1 bis 10, **dadurch gekennzeichnet,**
- **dass** der Übergang von der die Rastvertiefung (5) begrenzenden bzw. ausbildenden Nutinnenwandfläche (15) zu der Rastfläche (4) gerundet ist und/oder
- **dass** die Raupe (8) mit ihrem der Stirnfläche (17) der die Feder (6) tragenden Platte (1, 2) nächstliegenden Bereich (32) an der Rastfläche (4) anliegt und/oder
- **dass** gegenüber der Rastfläche (4) der Endbereich (22) der Ausnehmung (3) gelegen ist, der vorzugsweise in Form einer dreieckförmigen Querschnitt aufweisenden Begrenzungswand ausgebildet ist.

12. Platte(n) nach einem der Ansprüche 1 bis 11, **dadurch gekennzeichnet, dass** in dem obenflächennahen Bereich der Stirnflächen (17) oberhalb der Nut (12) und/oder der Feder (6) als Anschlag zur Einschubbegrenzung der Feder (6) in die Nut (12) zumindest ein Abstandshalter (23) angeordnet ist, der den Abstand der einander gegenüberliegenden Stirnflächen (17) der miteinander zu verbindenden Platten (1, 2) vorgibt und/oder
- dass die Nutfläche (15) bei verrasteter Nut (12) und Feder (6) mit ihrem über die Ausnehmung (3) verlaufenden Abschnitt an der Raupe (8) anliegt und/oder
- dass der Übergangsbereich von der Nutinnenwandfläche (15), in der die Rastvertiefung ausgebildet ist, zur Stirnfläche dieses Nutschenkels (13) gerundet ist und/oder
- dass sich die Rastvertiefung (5) und die Ausnehmung (3) und die Raupe (8), zumindest abschnittsweise, parallel zu der jeweiligen Stirnfläche bzw. Seitenkante bzw. Längsrichtung der Platte (1, 2) erstrecken und/oder
- dass von der Ausnehmung (3) ein Freiraum (30) zwischen der Raupe (8) und den an die Federfläche (7) anschließenden ins Innere der Feder (6) verlaufenden Flächen (31) der Ausnehmung (3) ausgebildet ist.

## Claims

1. (A) panel(s) for paneling floors, walls or ceilings, which are preferably made of wood, wood material, MDF, HDF, plastic, recycled plastic, using synthetic resin and/or bound wood chips or chip boards, said panels having a groove (12) extending along at least one longitudinal edge or end face (17) and/or a tongue (6) extending along at least one other edge or end face (17), wherein
- panels (1, 2) which are to be joined being joinable by inserting said tongue (6) into said groove (12) by a sliding movement which is effected essentially in the plane of the panel,
- a bead (8) of adhesive and/or plastic being applied and bound to at least one surface (7) of said tongue, especially by the manufacturer,
- a recess (3) having a triangular cross-section being formed in said face (7) of the tongue, said recess (3) partially accommodating said bead (8) of adhesive and/or plastic,
- a locking recess (4) delimited by a locking surface (4) being formed in the inner wall surface (15) of the groove facing said surface (7) of the tongue with said recess (3), said bead (8) projecting into said locking recess (5), when the tongue (6) is inserted into the groove (12), and the part (10) of the bead (8) projecting from said recess (3) being encompassed or accommodated by said locking recess (5), so that said bead (8) and said locking surface (4) are interlockable and/or joinable after the insertion of said tongue (6) into said groove (12) and are interlocked and/or joined, when two adjacent panels (1, 2) have been joined, and
- said locking surface (4) being perpendicular to the surface of the panel (1, 2), **characterized in**
- **that** said recess (3) is formed in an area of said tongue (6) which recedes from the surface (7) of the tongue in the direction of the end face of the panel (1, 2) or forms a receding area of said surface (7) of the tongue, and extends from said surface (7) of the tongue into the interior of the tongue (6) to a basis (9) formed by an end edge and from there in a direction away from the tongue (6) towards a boundary wall (22) having a triangular cross-section and, via said wall, blends into the area (11) of the tongue (6) which is close to the groove area,
- **that** said locking surface (4) is formed by an extension of the inner wall surface (15) of the groove close to the bottom of the groove and is directly linked thereto, and
- **that**, when said groove (12) and said tongue (6) are interlocked, a slit (21), which is especially preferred to be meniscal, is formed between said bead (8) and a rounded transition (21) between said inner wall surface (15) of the groove and said locking surface.

2. The panel(s) according to claim 1, **characterized in that** said groove (12) and said tongue (6) are formed at a long side and at a short side of a panel (1,2), respectively, in or at its end face (17) and/or
- that the thickness of the tongue (6) decreases towards its free end, at least one surface (7) of the tongue being inclined towards the surface of the panels (1, 2), and
- that the wall surface(s) (15) of the groove (12) extend(s) at the same angle as the respective or adjacent surface(s) (7) of the tongue, and/or
- that, at least via part of the surfaces (7, 15) facing each other, the tongue (6) and the groove (12) may be interlocked or snugly fit to one another and/or
- that the area of the tongue (6) between the bead or sheet (8) and the free end of the tongue (6) are insertable into the groove (12) so that they interlock or snugly fit to one another, and/or
- that the tongue (6) and/or the groove (12) and/or the bead or sheet (8) and/or the locking recess (5) extend along the overall length of the respective side surface (17) or that the groove (12) and/or the tongue (6) and/or the bead (8) and/or the locking recess (5) extend along the side surface (17) in the form of subsequent spaced portions or bead portions or recesses.

3. The panel(s) according to claim 1 or claim 2, **characterized in that** a portion of the bead or sheet (8) is disposed embedded in the recess (3).

4. The panel(s) according to any one of the claims 1 to 3, **characterized in that** the adhesive forming the bead or sheet (8) is water-soluble or may be solubilized and/or activated when contacted with water and/or humidity or under water and/or humidity supply and/or consists of water-soluble glue, such as casein glue, and/or a pressuresensitive adhesive or an adhesive producing an adhesive effect when pressure is applied or a pressure-activatable adhesive and/or of a polyvinyl-acetate-based fast setting glue or assembly glue and/or a commercially available wood glue, such as a starch- and/or protein-based glue, and/or
- that the bead or sheet (8) has such a hardness or viscosity that inserting the tongue (6) into the groove (12) or widening the groove (12) when inserting the tongue (6) or sliding the leg of the groove over the tongue does not lead to any substantial permanent deformation and that it serves as a locking element preventing the tongue (6) from sliding out of the groove (12) after having been inserted therein, optionally until the adhesive effect sets in.

5. The panel(s) according to any one of the claims 1 to 4, **characterized in**
- **that** the legs (13, 14) of the groove (12) are of equal length, and/or
- **that** the leg (14) of the groove (12) which is formed on the back side of the panel (1, 2) is slightly shorter than the leg (13) which is situated on the front side of the panel (1, 2), and/or
- **that** at least one of the legs (13, 14) of the groove (12), preferably the lower leg (14), may be elastically widened or bent up when the tongue (6) is inserted, and/or
- **that** the groove (12) and the tongue (6) are formed of the material of the panel (1, 2) or are cut out of the panel (1, 2), or
- **that** the tongue (6) is formed as an integral part of the material of the panel (1, 2), and/or
- **that** the end face areas abut in the area of the surfaces or effective surfaces (18) of two joined panels (1, 2), and that a slit (25) is optionally formed in the area of the back sides (24) of the two joined panels (1, 2) between the two end faces (17).

6. The panel(s) according to any one of the claims 1 to 5, **characterized in that** the portion (10) of the bead or sheet (8) projecting from the recess (3) and/or the locking recess (5) have a rounded profile in cross-section, especially a lenticular, semi-elliptic or circular profile, and/or
- that the projecting portion (10) of the bead or sheet (8) functions as an interlocking element and/or as an element with an adhesive effect, and/or
- that the adhesive of an applied bead or sheet (8) is deformable, especially under the influence of water and/or humidity and/or constant pressure, and optionally adjusts to the cross-sectional form of the locking recess (5), especially while exerting its adhesive effect, or fills the empty space of said locking recess (5), if there is an excess of adhesive material, and/or
- that the bead or sheet (8) strongly adheres to the recess (3), and/or
- that, when the groove (12) and the tongue (6) are interlocked, the bead (8) abuts against the locking surface (4) and, optionally, the groove surface (15), especially in a position in which it exerts pressure on one of these surfaces (4, 15).

7. The panel(s) according to any one of the claims 1 to 6, **characterized in that** the bead or sheet (8) of adhesive comprises a latently adhesive material, preferably a polymer adhesive which may be emulsified using water, said adhesive material being convertible into its ready-to-bond or bonding condition by wetting it with water, and/or
- that the plastic material or the adhesive material of the adhesive bead or sheet (8) which may be (re)activated by water or water humidity is applied in an essentially, constant thickness of 0.5 to 0.9 mm, especially of 0.6 to 0.8 mm, thickness tolerances ranging from ± 0.05 to 0.1 mm.

8. The panel(s) according to any one of the claims 1 to 7, **characterized in that** the leg (3) of the groove (12) which is situated close to the surface is stronger or thicker and/or less elastic and bendable than the lower leg (4), and/or that the bead (8) is formed only on the surface (7) of the tongue which faces downwards and the locking recess (5) is formed only in the wall surface of the lower leg (4) of the groove (12).

9. The panel(s) according to any one of the claims 1 to 8, **characterized in that** the bead (8) and the locking surface (4) of the locking recess (4) interlock, and/or
- that, when the groove (12) and the tongue (6) are interlocked, at least one of the legs (13, 14) of the groove, which is widened when the tongue (6) is inserted thereto, exerts pressure or force on the bead (8), and/or
- that the bead (8), or at least sections thereof, is/are parallel to or extend(s) along the edges of the end face (17) or in the longitudinal direction of the panel (1, 2).

10. The panel(s) according to any one of the claims 1 to 9, **characterized in that** the cross-section of the bead (8) is rounded to be circular or elliptic or lenticular in the area in which it projects from the recess (3).

11. The panel(s) according to any one of the claims 1 to 10, **characterized in**
- **that** the transition from the inner wall surface (15) of the groove bordering or forming the locking recess (5) to the locking surface (4) is rounded, and/or
- **that** the bead (8) abuts against the locking surface (4) with a section (32) which is situated closest to the end face (17) of the panel (1, 2) supporting the tongue (6), and/or
- **that** the end face (22) of the recess (3) is situated opposite the locking surface (4), said end face (22) preferably being formed as a delimiting wall having a triangular cross-section.

12. The panel(s) according to any one of the claims 1 to 11, **characterized in that** at least one spacer (23) is disposed in the area of the end faces (17) close to the surface above the groove (12) and/or the tongue (6) as a stopper for limiting the extent to which the tongue (6) may be inserted into the groove (12), said spacer (23) determining the distance between the opposite end faces (17) of the panels (1, 2) which are to be joined, and/or
- that the groove surface (15), when the groove (12) and the tongue (6) are interlocked, abuts against the bead (8) with a section extending over the recess (3), and/or
- that the transition area from the inner wall surface (15) of the groove in which the locking recess is formed to the end face of said leg (13) of the groove is rounded, and/or
- that the locking recess (5) and the recess (3) and the bead (8), or at least sections thereof, are parallel to the respective end face or lateral edge or extend in the longitudinal direction of the panel (1, 2), and/or
- that the recess (3) forms an empty space (30) between the bead (8) and the surfaces (31) of the recess (3) which are adjacent to the surface (7) of the tongue and extend into the interior of the tongue (6).

## Revendications

1. Panneau(x) de revêtement pour sol, murs ou plafond qui, de préférence, est/sont formé(s) de bois, d'un matériau dérivé du bois, de MDF, de HDF, de matières plastiques, de matières plastiques recyclées, avec une résine synthétique et/ou avec des copeaux reliés ou des panneaux de particules, lesdits panneaux de revêtement ayant une rainure (12) qui s'étend le long d'au moins un bord ou une surface de bout (17) et/ou une languette (6) qui s'étend le long d'au moins un autre bord ou une autre surface de bout (17),
- des panneaux (1, 2) à relier étant reliable par l'insertion de ladite languette (6) dans ladite rainure (12) au cours d'un mouvement de translation dans le plan des panneaux,
- une chenille (8) d'adhésif et/ou de matières plastiques étant appliquée sur et liée à au moins une surface (7) de ladite languette, de préférence par le fabricant,
- un creux (3) à section triangulaire étant formé dans ladite surface (7) de la languette, ladite chenille (8) d'adhésif et/ou de matières plastiques étant au moins partiellement contenue dans ledit creux,
- un creux de verrouillage (5) bordé par une surface de verrouillage (4) étant formé dans la surface de la paroi intérieure (15) de la rainure, la chenille (8) saillant dans ledit creux de verrouillage (5) quand la languette (6) est insérée dans la rainure (12) et la partie (10) de la chenille (8) qui saillit du creux (3) étant entourée par ou contenue dans ledit creux de verrouillage (5), ainsi que la chenille (8) et la surface de verrouillage (4) peuvent être enclenchées et/ou sont reliables après l'insértion de la languette (6) dans la rainure et sont enclenchées et/ou reliées quand deux panneaux (1, 2) adjacents se trouvent dans l'état assemblé, et
- ladite surface de verrouillage (4) étant perpendiculaire par rapport à la surface du panneau (1, 2),
**caractérisé**(s) en ce
- que le creux (3) est formé dans un domaine de la languette (6) qui est en retrait par rapport à la surface (7) de la languette dans la direction des surfaces de bout du panneau (1, 2) ou forme un domaine en retrait de la surface (7) de la languette, et s'étend de la surface (7) de la languette vers l'intérieur de la languette (6) et vers une base (9) formée par un bord de bout et de ladite base dans une direction opposée à la languette (6) vers une paroi limitative (22) avec une section triangulaire, ladite paroi (22) formant la transition du creux (3) au domaine (11) de la languette (6) proche de la surface de la rainure,
- que ladite surface de verrouillage (4) est formée ou représentée par une extension de la surface (15) de la paroi intérieure de la languette proche au fond de la rainure et est directement rattachée à ladite paroi, et
- que, quand la rainure (12) et la languette (6) sont enclenchées, un interstice (21), de préférence en forme de ménisque, est formé entre la chenille (8) et une transition arrondie (21) entre la surface (15) de la paroi intérieure de la languette et la surface de verrouillage.

2. Panneau(x) selon la revendication 1, **caractérisé**(s) en ce que la rainure (12) et la languette (6) sont respectivement formées à la côté longitudinal et la côté transversale d'un panneau (1, 2) dans ou sur la surface de bout (17) et/ou
- que l'épaisseur de la languette (6) diminue vers son bout libre, au moins une surface (7) de la languette étant inclinée par rapport à la surface des panneaux (1, 2) et
- que la surface murale/les surfaces murales (15) de la rainure (12) s'étend/s'étendent dans le même angle que la surface respective ou adjacente/les surfaces respectives ou adjacentes (7) de la languette et/ou
- que la languette (6) et la rainure (12) sont reliables par engagement positif ou par ajustement fin via au moins une partie des surfaces (7, 15) qui sont orientées l'une vers l'autre et/ou
- qu'au moins le domaine de la languette (6) situé entre la chenille ou la feuille (8) et le bout libre de la languette (6) peut être placé dans la rainure (12) en engagement positif ou par ajustement fin et/ou
- que la languette (6) et/ou la rainure (12) et/ou la chenille ou feuille (8) et/ou le creux de verrouillage (5) s'étend(ent) le long de la longueur entière de la surface latérale (17) respective ou que la rainure (12) et/ou la languette (6) et/ou la chenille (8) et/ou le creux de verrouillage (5) s'étend(ent) le long de la surface latérale (17) en forme de sections ou de sections de chenille ou de creux consécutifs et écartés.

3. Panneau(x) selon la revendication 1 ou 2, **caractérisé**(s) en ce qu'une partie de la chenille ou feuille (8) est disposée enfoncée dans le creux (3).

4. Panneau(x) selon l'une des revendications 1 à 3, **caractérisé**(s) en ce que l'adhésif formant la chenille ou feuille (8) est soluble dans l'eau ou est soluble ou activable s'il entre en contacte avec de l'eau ou de l'humidité ou si de l'eau ou de l'humidité y est amené et/ou consiste en une colle soluble dans l'eau, par exemple en une colle de caséine, et/ou en un adhésif sensible à la pression ou un adhésif qui a un effet adhésif sous pression ou est activable par pression et/ou consiste en un durcisseur rapide ou une colle de montage à base du polyacétate de vinyle et/ou en une colle à bois en vente dans le commerce, par exemple sur la base d'amidon ou de protéine, et/ou
- que la chenille ou feuille (8) a une telle dureté ou viscosité que l'insertion de la languette (6) dans la rainure (12) et l'élargissement de la rainure (12) par l'insertion de la languette (6) ou le glissement des branches de la rainure au dessus de la chenille ou feuille (8) ne cause pas de changement de forme substantiel et permanent, et que la chenille ou feuille (8), après l'insertion de la languette (6), sert d'élément de verrouillage pour prévenir que la languette (6) ne sorte de la rainure (12), éventuellement en attendant que l'effet adhésif se produise.

5. Panneau(x) selon l'une des revendications 1 à 4, **caractérisé**(s) en ce
- que les branches (13, 14) de la rainure (12) sont de la même longueur et/ou
- que la branche (14) de la rainure (12) formée sur la face arrière du panneau (1, 2) est un peu plus courte que la branche (13) disposée sur la face avant du panneau (1, 2) et/ou
- qu'au moins une des branches (13, 14) de la rainure (12), de préférence la branche inférieure (14), peut être dépliée de manière élastique pour élargir la rainure (12) quand la languette (6) est insérée et/ou
- que la rainure (12) et la languette (6) sont formées de la matière du panneau (1, 2) ou fraisées du panneau (1, 2) ou
- que la languette (6) est faite en une seule pièce de la matière du panneau (1, 2) et/ou
- que les domaines des surfaces de bout dans le domaine des surfaces ou des surfaces utiles (18) de deux panneaux (1, 2) reliés sont adjacents et qu'un interstice (25) est éventuellement formé entre les surfaces de bout (17) dans le domaine de la face arrière (24) des panneaux (1, 2) reliés.

6. Panneau(x) selon l'une des revendications 1 à 5, **caractérisé**(s) en ce que la partie (10) de la chenille ou feuille (8) qui saillit du creux (3) et/ou le creux de verrouillage (5) ont un contour arrondi en coupe transversale, notamment un contour lenticulaire, hémi-ellipsoïdal ou circulaire, et/ou
- que la partie (10) saillante de la chenille ou feuille (8) sert d'élément de verrouillage et/ou d'élément produisant un effet adhésif et/ou
- que l'adhésif formant la chenille ou feuille (8) appliquée est déformable, notamment sous l'influence de l'eau et/ou de l'humidité et/ou de pression constante, et éventuellement s'adapte à la forme de la section du creux de verrouillage (5), notamment produisant son effet adhésif, ou remplit l'espace vide du creux de verrouillage (5), s'il y a un excès d'adhésif, et/ou
- que la chenille ou feuille (8) adhère de manière fixe dans le creux (3) et/ou
- que, quand la rainure (12) et la languette (6) se trouvent dans leur position verrouillée ou enclenchée, la chenille (8) est adjacente à la surface de verrouillage (4) et éventuellement à la surface (15) de la rainure, notamment dans une position dans laquelle elle exerce de la pression sur une de ces surfaces (4, 15).

7. Panneau(x) selon l'une des revendications 1 à 6, **caractérisé**(s) en ce que la chenille ou feuille (8) d'adhésif comprend une substance adhésive latente, de préférence une colle polymère émulsionnable dans l'eau, la substance adhésive pouvant être mise dans un état dans lequel elle est prête à coller ou collable en la humidifiant avec de l'eau et/ou
- que les matières plastiques ou la substance adhésive de la chenille ou feuille (8) adhésive qui peut être (ré)activée avec de l'eau ou avec d'humidité d'eau est/sont appliquée/s sur une épaisseur constante de 0,5 à 0,9 mm, de préférence de 0,6 à 0,8 mm, les tolérances pour l'épaisseur étant de ± 0,5 à 0,1 mm.

8. Panneau(x) selon l'une des revendications 1 à 7, **caractérisé**(s) en ce que la branche (3) de la rainure (12) qui est proche de la surface est plus massive ou épaisse et/ou moins élastique et flexible que la branche inférieure (4) et/ou que la chenille (8) est exclusivement formée sur la surface (7) de la languette qui est orientée vers le bas et le creux de verrouillage (5) est exclusivement formé dans la surface murale de la branche (4) inférieure de la rainure (12).

9. Panneau(x) selon l'une des revendications 1 à 8, **caractérisé**(s) en ce que la chenille (8) et la surface de verrouillage (4) du creux de verrouillage (5) se trouvent en prise arrière et/ou
- qu'une branche (13, 14) de la rainure qui est élargie quand la languette (6) y est insérée exerce de la pression ou de la force sur la chenille (8), quand la rainure (12) et la languette (6) sont verrouillées, et/ou
- qu'au moins des sections de la chenille (8) s'étendent parallèlement à ou le long des bords de la surface de bout (17) ou dans la direction longitudinale du panneau (1, 2).

10. Panneau(x) selon l'une des revendications 1 à 9, **caractérisé**(s) en ce que, dans le domaine qui saillit du creux (3), la section de la chenille (8) est arrondie et a une forme circulaire ou elliptique ou lenticulaire.

11. Panneau(x) selon l'une des revendications 1 à 10, **caractérisé**(s) en ce
- que la transition de la surface (15) de la paroi intérieure de la rainure bordant à ou formant le creux de verrouillage (5) à la surface de verrouillage (4) est arrondie et/ou
- que le domaine (32) de la chenille (8) qui est plus proche de la surface de bout (17) du panneau (1, 2) supportant la languette (6) est adjacent à la surface de verrouillage (4) et/ou
- que le domaine de bout (22) du creux (3) est située vis-à-vis la surface de verrouillage (4), ledit domaine de bout (22) étant, de préférence, en forme d'une paroi limitative avec une section triangulaire.

12. Panneau(x) selon l'une des revendications 1 à 11, **caractérisé**(s) en ce qu'au moins un écarteur (23) est disposé dans le domaine des surfaces de bout (17) au-dessus de la rainure (12) et/ou de la languette (6), servant d'arrêt pour limiter l'insertion de la languette (6) dans la rainure (12), ledit écarteur (23) déterminant la distance entre les surfaces de bout (17) opposées des panneaux (1, 2) à relier et/ou
- que la surface (15) de la rainure, quand la rainure (12) et la languette (6) sont verrouillées, est adjacente à la chenille (8) dans le domaine qui s'étend au dessus du creux (3) et/ou
- que le domaine de transition de la surface (15) de la paroi intérieure de la rainure, dans laquelle le creux de verrouillage est formé, à la surface de bout de la branche (13) de la rainure est arrondi et/ou
- qu'au moins des sections du creux de verrouillage (5) et du creux (3) et de la chenille (8) s'étendent parallèlement à la surface de bout respective ou au bord latéral respectif ou dans la direction longitudinale du panneau (1, 2) et/ou
- que le creux forme un espace vide (30) entre la chenille (8) et les surfaces (31) du creux (3) qui sont rattachées à la surface de la languette (7) et s'étendent vers l'intérieur de la languette (6).
